# EUROPÄISCHE PATENTSCHRIFT

(11) **EP 2 464 589 B1**
(45) Veröffentlichungstag und Bekanntmachung des Hinweises auf die Patenterteilung: **08.05.2013**
(21) Anmeldenummer: 10767913.6
(22) Anmeldetag: 09.08.2010
(51) Int. Cl.: B65G 69/28

(54) **FÖRDERGUTVERTEILER**
CONVEYED-GOODS DISTRIBUTOR
DISTRIBUTEUR DE PRODUITS A TRANSPORTER

(30) Priorität: 10.08.2009 DE 202009010788 U
(43) Veröffentlichungstag der Anmeldung: 20.06.2012
(73) Patentinhaber: TRANSNORM SYSTEM GmbH, 31177 Harsum (DE)
(72) Erfinder: VENTZ, Kai, 31139 Hildesheim (DE)
(74) Vertreter: Siekmann, Gunnar
(86) Internationale Anmeldenummer: PCT/DE2010/000926
(87) Internationale Veröffentlichungsnummer: WO 2011/018071

(56) Entgegenhaltungen:
- DE-A1- 4 339 921
- US-A- 3 334 368
- US-A- 4 065 824

## Beschreibung

Die Erfindung bezieht sich auf eine Vorrichtung zum Verteilen oder Zusammenführen von Förderströmen, insbesondere auf einen Fördergutverteiler, mit zumindest einem Förderorgan, welches verstellbar ist und mit wenigstens einem Verstellantrieb für das Förderorgan, wobei der Verstellantrieb wenigstens ein Antriebsmittel und ein Umlenkgetriebe aufweist, wobei das als Kurbeltrieb ausgebildete Umlenkgetriebe mit zumindest einem mechanischen Energiespeicher als Hilfsantrieb für mindestens eine der Verstellbewegungen des Förderorgans gekoppelt ist.

Bekannte Vorrichtungen sind beispielsweise Horizontal- oder Vertikalverteiler, die eingesetzt werden, um den Materialfluss von zum Beispiel zu fördernden Schütt- oder Stückgütern in Fertigungsbetrieben, Distributionszentren oder Flughäfen sicherstellen zu können. Mittels solcher Horizontal- oder Vertikalverteiler werden beispielsweise die auf einer Förderstrecke ankommenden Fördergüter auf unterschiedliche Förderstrecken verteilt bzw. auf unterschiedlichen Förderstrecken ankommende Fördergüter auf einer Sammelförderstrecke zu einem Förderstrom zusammengeführt.

Fördergutverteiler der vorbezeichneten Gattung weisen zumindest ein Förderorgan für das häufig als Stückgut vorliegende Transportgut auf, wobei das Förderorgan üblicherweise mittels eines Gestellrahmens in vorbestimmter Ausrichtung gehalten ist. Im Falle eines Vertikalverteilers ist dann das Förderorgan, welches beispielsweise als Gurtförderer oder Rollenförderer ausgebildet sein kann, in einer etwa vertikal zur Flächennormalen ausgerichteten Ebene beweglich am Gestellrahmen aufgenommen. Bei der Verwendung eines Horizontalverteilers wird in der Regel das Förderorgan gemeinsam mit dem Gestellrahmen in einer horizontal verlaufenden Ebene verstellt. Neben dem üblicherweise zum Einsatz kommenden Förderantrieb für die Förderbewegung des Förderorgans weisen derartige Fördergutverteiler einen Verstellantrieb für eine zwangsgeführte Verstellbewegung wenigstens des Förderorganes auf. Die dafür benötigte Antriebsleistung und der damit verbundene Energiebedarf des Verstellantriebes ist vornehmlich von dem zu erzeugenden, durch die Masse des Förderorganes und/oder des Gestellrahmens bestimmten Anfahrmoment abhängig, welches zu Beginn der Verstellbewegung des Förderorganes aus einer jeweiligen Verteilerposition in der Regel am größten ist. Somit ist das den Verstellantrieb unter anderem ausbildende Antriebsmittel, in Bezug auf die über den restlichen Weg der Verstellbewegung zu erbringende Antriebsleistung, übermäßig groß zu dimensionieren. Bekannte Vorrichtungen zum Verteilen oder Zusammenführen von Förderströmen haben demzufolge einen relativ hohen Energiebedarf und verursachen dadurch entsprechend hohe, laufende Betriebskosten.

Aus der DE 199 14 816 C2 ist beispielsweise eine Vorrichtung zum Verteilen oder Zusammenführen von Förderströmen bekannt, welches einen Verstellantrieb und einen mechanischen Energiespeicher als Hilfsantrieb für eine Verstellbewegung des Förderorganes aufweist. Der Energiespeicher, welcher insbesondere als Zugfeder ausgebildet ist, unterstützt das Antriebsmittel des Verstellantriebes beim Verstellen des Förderorgans. Die Längsachse der Zugfeder ist dabei in Richtung der Verstellbewegung des Förderorgans ausgerichtet. Deren Verwendung hat eine konstruktiv relativ aufwendige Halterung zur Folge, wobei die Verstellmöglichkeit des Förderorgans in Verstellrichtung gegebenenfalls eingeschränkt sein kann.

Aus der US 3,334,368 A ist eine Verladerampe bekannt, die in eine Zwischenposition bringbar ist. Der Verstellantrieb für die Verladerampe ist mit einem Federelement gekoppelt. Die Federenden werden üblicherweise vorgespannt. Ebenso wird das Federelement nur mit einer positiven Torsionsspannung beaufschlagt. Die Angriffsmittel der Verladerampe werden also stehts nur in eine Richtung verdreht bzw. zusammengedrückt.

Aus der US 4,065,824 A ist ein Federelement bekannt, welches in Verbindung mit der offenbarten Verladerampe nur mit einer positiven Torsionsspannung beaufschlagt werden kann. Innerhalb der Feder besteht eine dauerhafte Vorspannung.

Der Erfindung liegt die Aufgabe zugrunde eine Vorrichtung der vorbezeichneten Gattung dahingehend zu verbessern, dass eine vereinfachte und zugleich vorteilhaft kompakte Ausgestaltung des Energiespeichers an der Vorrichtung erreicht ist.

Die Lösung der Aufgabe erfolgt erfindungsgemäß durch eine Vorrichtung mit den Merkmalen des Patentanspruches 1. Vorteilhafte Weiterbildungen und Ausgestaltungen der Erfindung sind in den Unteransprüchen angegeben.

Bei einer Vorrichtung zum Verteilen oder Zusammenführen von Förderströmen, insbesondere Fördergutverteiler, mit zumindest einem Förderorgan, welches verstellbar ist, und mit wenigstens einem Verstellantrieb für das Förderorgan, wobei der Verstellantrieb wenigstens ein Antriebsmittel und ein Umlenkgetriebe aufweist, wobei das als Kurbeltrieb ausgebildete Umlenkgetriebe mit zumindest einem mechanischen Energiespeicher als Hilfsantrieb für mindestens eine der Verstellbewegungen des Förderorgans gekoppelt ist, ist nach der Erfindung vorgesehen, dass der Energiespeicher ein Federelement ist, dessen eines Federende drehfest aufgenommen und dessen anderes Federende mit dem Kurbeltrieb drehgebend verbunden ist und dass das Federelement seine Neutralstellung auf halben Verstellweg zwischen zwei Verteilerpositionen hat, wobei das Federelement in den entsprechenden Verteilerpositionen eine positive oder negative Federspannung aufweist.

Mit Hilfe einer derartig erfindungsgemäß ausgebildeten Vorrichtung lässt sich insbesondere das vom Verstellantrieb zu überwindende Anfahrmoment zu Beginn der Verstellbewegung des Förderorgans aus einer jeweiligen Verteilerposition vorteilhaft verringern. Somit wird dauerhaft eine geringere Antriebsleistung des üblicherweise das Förderorgan mit hoher Taktfrequenz zwischen den Verteilerpositionen hin und her bewegenden Verstellantriebes benötigt, weshalb der Verstellantrieb entsprechend kleiner dimensioniert werden kann. Der Verstellantrieb weist dabei wenigstens ein Antriebsmittel und ein als Kurbeltrieb ausgebildetes Umlenkgetriebe auf, wobei der Energiespeicher mit dem Umlenkgetriebe gekoppelt ist. Mit dem Einsatz eines Kurbeltriebes erfolgt eine vorteilhafte Umwandlung einer beispielsweise mittels des Antriebsmittels erzeugten Drehbewegung in eine translatorische Bewegung, wie es beispielsweise zur Umsetzung einer vom Förderorgan auszuführenden, etwa vertikal gerichteten Hubbewegung gegeben ist. Die Kopplung des als Hilfsantrieb arbeitenden Energiespeichers mit dem Umlenkgetriebe hat zudem den Vorteil, dass der Energiespeicher vorteilhaft einfach mit dem entsprechenden Bauteil des Getriebes beispielsweise drehgebend oder eine Gradbewegung initiierend verbunden werden kann. Das Umlenkgetriebe kann ebenfalls beispielsweise als Ritzel- Zahnriementrieb ausgebildet sein. Der Energiespeicher ist insbesondere ein Federelement, dessen eines Federende drehfest aufgenommen und dessen anderes Federende mit dem Kurbeltrieb drehgebend verbunden ist. Das insbesondere die Funktion einer Drehfeder umsetzende Federelement wird somit in Abhängigkeit zur Drehrichtung des Kurbeltriebs entweder gespannt, sodass dessen potenzielle Energie vergrößert wird, oder entlastet, wobei dann die in der Feder gespeicherte Energie zur Unterstützung des Verstellantriebes an den Kurbeltrieb abgegeben wird.

Der mechanische Energiespeicher kann beispielsweise auch als ein in einem Zylinder geführter, mit dem Förderorgan oder dem Gestellrahmen gekoppelter Kolben mit Ruhelage in ausgefahrener Stellung ausgebildet sein, wobei der Zylinder ein geschlossenes System ist. Beim Einschieben des Kolbens aus seiner Ruhestellung in dessen zweite, eingefahrene Endlagenstellung entsteht im Inneren des Zylinders ein gegen den Kolben wirkendes Druckgaspolster. Demzufolge erfolgt durch die auf den Kolben wirkende Kraft bei der Rückbewegung automatisch eine Unterstützung des Verstellantriebes bei der Verstellbewegung des Förderorganes.

Bevorzugt ist das Förderorgan in vertikaler Ebene verstellbar ausgebildet, so dass mit Hilfe des als Energiespeicher ausgebildeten Hilfsantriebes ein Teil der Masse des zu bewegenden Förderorgans vornehmlich bei der Aufwärtsbewegung aufgenommen und bewegt wird. Die insbesondere als Vertikalverteiler ausgebildete, erfindungsgemäße Vorrichtung kann durch den Verstellantrieb somit vereinfacht bewegt werden, wodurch sich das Förderorgan mit einer höheren Dynamik in eine entsprechende Position verstellen lässt.

Vorzugsweise weist der Kurbeltrieb zumindest eine mit dem Antriebsmittel verbundene Welle, mindestens einen mit der Welle drehfest verbundenen Kurbelarm und wenigstens eine den Kurbelarm und das verstellbare Förderorgan miteinander koppelnde Schubstange auf. Die Verwendung eines Kurbeltriebes stellt in diesem Zusammenhang eine vorteilhaft konstruktive Möglichkeit zur Ausbildung des Umlenkgetriebes dar. Mit Hilfe des Kurbeltriebes lassen sich insbesondere Versatzbewegungen, welche beispielsweise quer zur vorzunehmenden Hubbewegung des Förderorgans auftreten können, sich mit Vorteil ausgleichen.

Vorzugsweise ist das Federelement mit seinem Federende mit einem der Kurbelarme des Kurbelgetriebes drehgebend verbunden. Alternativ kann vorgesehen sein, dass das Federende des Federelementes mit der Welle des Kurbelgetriebes gekoppelt ist. An Stelle eines als Drehfeder ausgebildeten Federelementes kann das Federelement ebenso als Zug- oder Druckfeder ausgebildet sein, wobei das Federelement als Druckfeder mit einem Ende dann direkt an zum Beispiel der Schubstange des Kurbeltriebes angreift. Bei der Ausbildung des Federelementes als Zugfeder ist gegebenenfalls der Einsatz einer Umlenkrolle notwendig, wobei ein Federende des Federelementes mit dem Gestellrahmen und das andere Federende mit dem Kurbeltrieb über ein entsprechendes Zugmittel verbunden ist, wie zum Beispiel ein über die Umlenkrolle geführtes Zugseil.

Nach einer Weiterbildung der Erfindung ist vorgesehen, dass das Federelement und die Welle des Kurbeltriebes derart zueinander angeordnet sind, dass die Mittenachse des Federelementes koaxial zur Rotationsachse der Welle verläuft. Durch das die Welle des Kurbeltriebes vorzugsweise ummantelnde Federelement ist eine vorteilhaft kompakte Anordnung des Energiespeichers am Umlenkgetriebe erreicht. Des weiteren erfolgt mittels der Welle des Kurbeltriebes eine vorteilhafte Führung der Drehfeder auf der Welle, wodurch insbesondere ein Ausknicken des Federelementes aus seiner Mittenachse in einem gespannten Zustand vermieden ist. Dabei kann es vorgesehen sein, dass das Federelement in den jeweiligen Verteilerpositionen eine positive oder negative Federspannung aufweist. Das Federelement kann somit seine neutrale Stellung ohne Vorspannung beispielsweise auf halben Wege zwischen zwei Verteilerpositionen haben.

Das Förderorgan ist mit einem seiner Enden über eine horizontal verlaufende Achse an einem Gestellrahmen schwenkbeweglich aufgenommen, wobei über das mittels der Achse ausgebildete Drehlager eine vorteilhaft einfache und zugleich sichere Verbindung geschaffen ist. Die Schwenkachse des Förderorgans ist dabei vorzugsweise deckungsgleich zur Drehachse der Antriebstrommel des beispielsweise als Gurtförderer ausgebildeten Förderorgans angeordnet. Das hat den Vorteil, dass eine Seite der zum Beispiel als Vertikalverteiler ausgebildeten Vorrichtung ein gleichbleibendes Höhenniveau zur Aufnahme bzw. Abgabe der Fördergüter aufweist.

Das Umlenkgetriebe des Verstellantriebes ist dabei mit einem Abschnitt auf etwa der halben Länge des vertikal verstellbaren Förderorgans verbunden. Die Ausbildung des Angriffspunktes für das Umlenkgetriebe des Verstellantriebes ist insbesondere abhängig vom Eigengewicht des Förderorgans und der darüber zu transportierenden Stückgüter und ebenfalls von dem durch den Vertikalverteiler zu überwindenden Höhenunterschied zwischen den einzelnen Verteilerpositionen. Die Anordnung des Umlenkgetriebes auf etwa der Hälfte des Förderorgans hat den Vorteil, dass die vom Verstellantrieb zu erbringende Antriebsleistung und die gleichzeitig vom Verstellantrieb, insbesondere dessen mit dem Kurbelarm gekoppelten Schubstange, vorzunehmende Verstellbewegung ein optimales Verhältnis zueinander aufweisen.

Nach einer anderen Weiterbildung der Erfindung ist vorgesehen, dass das Antriebsmittel ein Elektromotor ist, mit Hilfe dem sich auf vorteilhaft einfache Weise eine Antriebsbewegung erzeugen lässt. Zudem ergeben sich durch die hohe Verfügbarkeit der für den Elektromotor benötigten Primärenergie optimale Einsatzmöglichkeiten der erfindungsgemäß ausgebildeten Vorrichtung. Es ist selbstverständlich auch denkbar, an Stelle eines Elektromotors als Antriebsmittel einen Hydromotor einzusetzen. Es ist selbstverständlich auch möglich, das Antriebsmittel mit einem Übersetzungsgetriebe auszurüsten, wodurch eine vorteilhafte Änderung des vom Antriebsmittel bereit zu stellenden Drehmomentes vorgenommen werden kann.

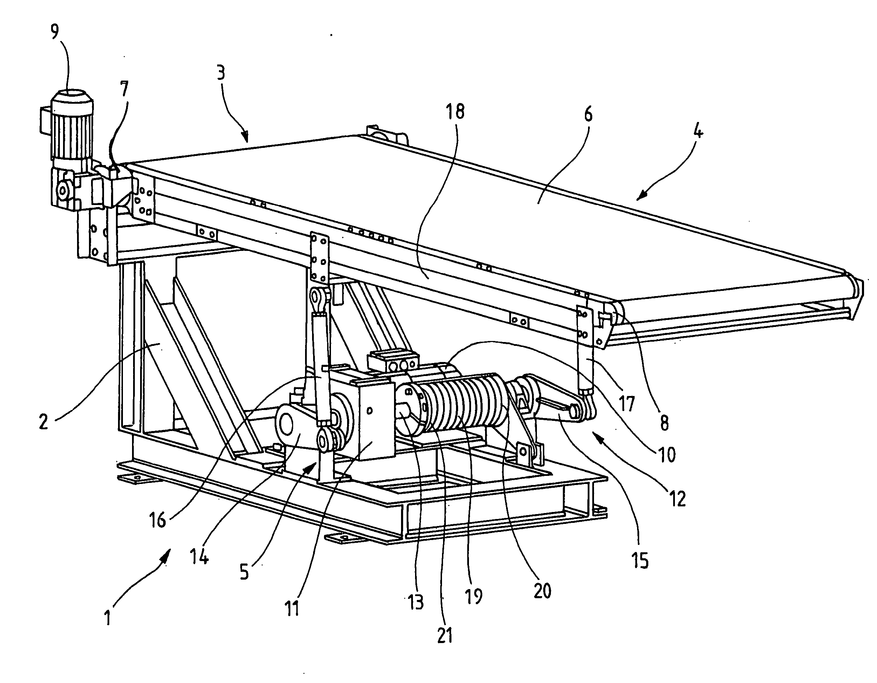

Ein Ausführungsbeispiel der Erfindung, aus dem sich weitere erfinderische Merkmale ergeben, ist in der Zeichnung dargestellt.

Die einzige Figur zeigt eine perspektivische Ansicht einer erfindungsgemäßen Vorrichtung zum Verteilen oder Zusammenführen von Förderströmen.

Mit 1 ist ein Vertikalverteiler bezeichnet der ein Gestellrahmen 2, einen um eines seiner Enden 3 schwenkbeweglich angelenkten, als Gurtförderer ausgebildetes Förderorgan 4 und einen Verstellantrieb 5 für das insbesondere in vertikaler Ebene verstellbare Förderorgan 4 aufweist. Das Förderorgan weist insbesondere ein Gurtband 6 und zumindest eine Antriebstrommel 7 und eine Umlenktrommel 8 auf, wobei die Drehachse der Antriebstrommel 7 in der Schwenkachse des in seiner Neigung verstellbaren Förderorgans 4 liegt. Die Antriebstrommel 7 ist drehgebend mit einem Förderantrieb 9 verbunden, der bevorzugt eine konstante Drehbewegung erzeugt und somit für eine gleichbleibende Fördergeschwindigkeit sorgt. Der Verstellantrieb 5 weist insbesondere ein Antriebsmittel 10, ein Übersetzungsgetriebe 11 und ein als Kurbeltrieb ausgebildetes Umlenkgetriebe 12 auf. Das Umlenkgetriebe 12 weist wenigstens eine Welle 13 auf, die drehgebend mit dem insbesondere als Elektromotor vorliegenden Antriebsmittel 10 über das Übersetzungsgetriebe 11 verbunden ist. An der Welle 13 ist an jedem Ende ein Kurbelarm 14, 15 drehfest angeordnet, wobei am freien Ende jedes Kurbelarmes 14, 15 gelenkig eine Schubstange 16, 17 angeordnet ist, die jeweils über einen entsprechenden Angriffspunkt mit einem Rahmen 18 des Förderorgans 4 gekoppelt ist. Der Verstellantrieb 5 weist des weiteren einen als Hilfsantrieb fungierenden Energiespeicher 19 auf, welcher insbesondere einen Teil der Last des Förderorgans 4 im gespanntes Zustand aufnimmt und somit das zu überwindende Anfahrmoment verringert. Der Energiespeicher ist insbesondere ein Federelement 19, welche mit einem Federende 20 beispielweise fest mit dem Gestellrahmen 2 verbunden ist und mit ihrem anderen Federende 21 insbesondere mit der Welle 13 des Verstellantriebes 5 gekoppelt sein kann. Abhängig von der Drehrichtung der Welle 13 wird dann das Federelement 19 gespannt bzw. wieder entlastet. Die Welle 13 und der als Federelement 19 ausgebildete Energiespeicher haben dabei insbesondere eine Rotationsachse gemeinsam.

## Patentansprüche

1. Vorrichtung zum Verteilen oder Zusammenführen von Förderströmen, insbesondere Fördergutverteiler, mit zumindest einem Förderorgan, welches verstellbar ist, und mit wenigstens einem Verstellantrieb für zumindest das Förderorgan, wobei der Verstellantrieb wenigstens ein Antriebsmittel und ein Umlenkgetriebe aufweist, wobei das als Kurbeltrieb ausgebildete Umlenkgetriebe mit zumindest einem mechanischen Energiespeicher als Hilfsantrieb für mindestens eine der Verstellbewegungen des Förderorgans gekoppelt ist,
**dadurch gekennzeichnet,**
**dass** der Energiespeicher ein Federelement (19) ist, dessen eines Federende (20) drehfest aufgenommen und dessen anderes Federende (21) mit dem Kurbeltrieb drehgebend verbunden ist, und
**dass** das Federelement seine Neutralstellung auf halbem Verstellweg zwischen zwei Verteilerpositionen hat, wobei das Federelement in den entsprechenden Verteilerpositionen eine positive oder negative Federspannung aufweist.

2. Vorrichtung nach Anspruch 1, **dadurch gekennzeichnet, dass** das Förderorgan (4) in vertikaler Ebene verstellbar ist.

3. Vorrichtung nach Anspruch 1 oder 2, **dadurch gekennzeichnet, dass** der Kurbeltrieb zumindest eine Welle (13), mindestens einen mit der Welle drehfest verbundenen Kurbelarm (14, 15) und wenigstens eine den Kurbelarm (14, 15) und das verstellbare Förderorgan (4) miteinander koppelnde Schubstange (16, 17) aufweist.

4. Vorrichtung nach einem der Ansprüche 1 bis 3, **dadurch gekennzeichnet, dass** das Federelement (19) mit seinem Federende (21) mit einem Kurbelarm (14, 15) drehgebend verbunden ist.

5. Vorrichtung nach einem der Ansprüche 1 bis 3, **dadurch gekennzeichnet, dass** das Federende (21) des Federelementes (19) mit der Welle (13) des Kurbeltriebes gekoppelt ist.

6. Vorrichtung nach einem der Ansprüche 1 bis 5, **dadurch gekennzeichnet, dass** das Federelement (19) und die Welle (13) des Kurbeltriebes derart zueinander angeordnet sind, dass die Mittenachse des Federelementes (19) koaxial zur Rotationsachse der Welle (13) verläuft.

7. Vorrichtung nach einem der Ansprüche 1 bis 6, **dadurch gekennzeichnet, dass** das Förderorgan (4) mit einem seiner Enden (3) über eine horizontal verlaufende Achse an einem Gestellrahmen (2) schwenkbeweglich aufgenommen ist.

8. Vorrichtung nach Anspruch 7, **dadurch gekennzeichnet, dass** die Schwenkachse deckungsgleich zur Drehachse einer Antriebstrommel (7) des Förderorgans (4) angeordnet ist.

9. Vorrichtung nach einem der Ansprüche 1 bis 8, **dadurch gekennzeichnet, dass** das Umlenkgetriebe (12) des Verstellantriebes (5) mit einem Abschnitt auf etwa der Hälfte des vertikal verstellbaren Förderorgans (4) verbunden ist.

10. Vorrichtung nach einem der Ansprüche 1 bis 9, **dadurch gekennzeichnet, dass** das Antriebsmittel (10) für den Verstellantrieb (5) wenigstens ein Elektromotor ist.

11. Vorrichtung nach einem der Ansprüche 1 bis 10, **dadurch gekennzeichnet, dass** das Antriebsmittel (10) mit einem Übersetzungsgetriebe (11) ausgerüstet ist.

## Claims

1. A device for distributing or bringing together conveyance flows, in particular a conveyed-goods distributor, comprising at least one conveying element which can be adjusted, and at least one adjustment drive for at least the conveying element, the adjustment drive comprising at least one drive means and a redirecting transmission, the redirecting transmission being designed as a crank drive and being coupled to at least one mechanical energy store as an auxiliary drive for at least one of the adjustment motions of the conveying element,
**characterized in**
**that** the energy store is a spring element (19), the one spring end (20) of which is accommodated in a rotationally fixed manner, and the other spring end (21) of which is rotatably connected to the crank drive, and
**that** the spring element has its neutral position halfway between two distribution positions, said spring element having a positive or negative spring tension in the respective distribution positions.

2. The device according to claim 1, **characterized in that** the conveying element (4) can be adjusted in the vertical plane.

3. The device according to claim 1 or claim 2, **characterized in that** the crank drive comprises at least one shaft (13), at least one crank arm (14, 15) that is connected to the shaft in a rotationally fixed manner, and at least one push rod (16, 17) that couples the crank arm (14, 15) to the adjustable conveying element (4).

4. The device according to any one of the claims 1 to 3, **characterized in that** the spring element (19) is rotatably connected with its spring end (21) to a crank arm (14, 15).

5. The device according to any one of the claims 1 to 3, **characterized in that** the spring end (21) of the spring elements (19) is coupled to the shaft (13) of the crank drive.

6. The device according to any one of the claims 1 to 5, **characterized in that** the spring element (19) and the shaft (13) of the crank drive are arranged relative to each other in such a manner that the center axis of the spring element (19) runs coaxial to the rotational axis of the shaft (13).

7. The device according to any one of the claims 1 to 6, **characterized in that** the conveying element (4), with one of its ends (3), is pivotably accommodated on a rack frame (2) via a horizontally running axis.

8. The device according to claim 7, **characterized in that** the pivot axis is arranged congruent to the rotational axis of a drive drum (7) of the conveying element (4).

9. The device according to any one of the claims 1 to 8, **characterized in that** the redirecting transmission (12) of the adjustment drive (5) is connected to a section at approximately half the length of the vertically adjustable conveying element (4).

10. The device according to any one of the claims 1 to 9, **characterized in that** the drive means (10) for the adjustment drive (5) is at least one electric motor.

11. The device according to any one of the claims 1 to 10, **characterized in that** the drive means (10) is equipped with a transmission gearing (11).

## Revendications

1. Dispositif pour distribuer ou réunir des flux de produits à transporter, en particulier un distributeur de produits à transporter, avec au moins un organe de transport qui est réglable et avec au moins une commande de réglage pour au moins l'organe de transport, la commande de réglage présentant au moins un moyen d'entraînement et un mécanisme de dérivation, le mécanisme de dérivation constitué comme une commande à manivelle étant couplé à au moins un accumulateur d'énergie mécanique en tant qu'entraînement auxiliaire pour au moins un des mouvements de réglage de l'organe de transport **caractérisé en ce que** l'accumulateur d'énergie est un élément à ressort (19) dont une extrémité de ressort (20) est réceptionnée de façon fixe et dont l'autre extrémité de ressort (21) est reliée apte à la rotation à la commande de manivelle et **en ce que** l'élément de ressort a sa position neutre à mi-course de réglage entre les deux positions du distributeur, l'élément de ressort présentant une tension de ressort positive ou négative dans les positions du distributeur correspondantes.

2. Dispositif selon la revendication 1 **caractérisé en ce que** l'organe de transport (4) est réglable dans le plan vertical.

3. Dispositif selon la revendication 1 ou 2 **caractérisé en ce que** la commande à manivelle présente au moins un arbre (13), au moins un bras de manivelle (14, 15) relié de façon fixe à l'arbre et au moins une bielle (16, 17) couplant le bras de manivelle (14, 15) et l'organe de transport (4) réglable l'un à l'autre.

4. Dispositif selon une quelconque des revendications 1 à 3 **caractérisé en ce que** l'élément à ressort (19) est relié apte à la rotation avec son extrémité de ressort (21) à un bras de manivelle (14, 15).

5. Dispositif selon une quelconque des revendications 1 à 3 **caractérisé en ce que** l'extrémité de ressort (21) de l'élément de ressort (19) est couplé à l'arbre (13) de la commande de manivelle.

6. Dispositif selon une quelconque des revendications 1 à 5 **caractérisé en ce que** l'élément de ressort (19) et l'arbre (13) de la commande de manivelle sont montés l'un par rapport à l'autre de telle sorte que l'axe central de l'élément de ressort (19) passe de façon coaxiale à l'axe de rotation de l'arbre (13).

7. Dispositif selon une quelconque des revendications 1 à 6 **caractérisé en ce que** l'organe de transport (4) est réceptionné en mouvement pivotant sur un cadre de support (2) avec une de ses extrémités (3) sur un axe passant à l'horizontale.

8. Dispositif selon la revendication 7 **caractérisé en ce que** l'axe de pivotement est monté en coïncidence avec l'axe de rotation d'un tambour d'entraînement (7) de l'organe de transport (4).

9. Dispositif selon une quelconque des revendications 1 à 8 **caractérisé en ce que** le mécanisme de dérivation (12) de la commande de réglage (5) est relié avec une section sur à peu près la moitié de l'organe de transport (4) verticalement réglable.

10. Dispositif selon une quelconque des revendications 1 à 9 **caractérisé en ce que** le moyen d'entraînement (10) pour la commande de réglage (5) est au moins un moteur électrique.

11. Dispositif selon une quelconque des revendications 1 à 10 **caractérisé en ce que** le moyen d'entraînement (10) est équipé d'un mécanisme de transmission (11).
